Europäisches Patentamt

(19) European Patent Office

Office européen des brevets

(11) Publication number : **0 008 595**
**B2**

(12) NEW EUROPEAN PATENT SPECIFICATION

(45) Date of publication of the new patent specification :
09.09.87

(21) Application number : 78300381.7

(22) Date of filing : 13.09.78

(51) Int. Cl.⁴ : **C 08 F 10/00**, C 08 F   4/64

(54) Organomagnesium catalyst compositions and their use for polymerizing olefins.

(43) Date of publication of application :
**19.03.80 Bulletin 80/06**

(45) Publication of the grant of the patent :
**05.10.83 Bulletin 83/40**

(45) Mention of the opposition decision :
**09.09.87 Bulletin 87/37**

(84) Designated contracting states :
**BE DE FR GB NL**

(56) References cited :
**GB-A- 1 235 062**
**US-A- 2 956 993**
**US-A- 3 072 630**
**US-A- 3 880 817**
**Inorg. Chem. Vol. 7 (1968), pp. 129-133**

(73) Proprietor : **THE DOW CHEMICAL COMPANY**
**2030 Dow Center Abbott Road P.O. Box 1967**
**Midland, MI 48640 (US)**

(72) Inventor : **Birkelbach, Donald Floyd**
**County Road 687**
**Angleton Brazoria Texas (US)**

(74) Representative : **Allard, Susan Joyce et al**
**BOULT, WADE & TENNANT 27 Furnival Street**
**London EC4A 1PQ (GB)**

## Description

This invention relates to a new catalyst composition useful for initiating and promoting polymerization of ethylene and α-olefins and to a polymerization process employing such a catalyst composition.

Certain catalyst compositions comprising a trivalent titanium compound, an organomagnesium compound and a metallic or non-metallic halide are known. Thus, our co-pending European patent application. No. 79103250.1, which has an earlier priority date than that of this application (publication No. 0009160) describes catalyst compositions exhibiting high activity for polymerization of α-olefins which are prepared by reacting (A) tetravalent or trivalent titanium compounds such as titanium tetraalkoxide, (B) an anhydrous nickel compound such as nickel chloride, (C) an organomagnesium component such as a hydrocarbon soluble complex of dialkyl magnesium and an alkyl aluminium, (D) a halide source such as hydrogen halide or an alkyl aluminium halide and (E) an alkyl aluminium halide if not otherwise provided. The trivalent titanium compound used in these catalyst compositions is a complex of a trivalent titanium compound and an electron donor. Polymerization processes employing this catalyst composition do not require subsequent catalyst removal steps and the resulting polymers have broader molecular weight distributions than do corresponding polymers prepared without the added anhydrous nickel compound.

British Patent Specification No. 1500873 describes catalysts suitable for polymerizing olefins which are the reaction product of (A) a compound of transition metal, such as titanium (B) (1) an organomagnesium compound or (2) a complex of an organomagnesium compound and an organometallic compound and (C) a non-metallic halide.

British Patent Specification No. 1492379 describes catalysts which are (I) the reaction product of (A) an ester of tetravalent or trivalent titanium with (B) an intermediate raction product of (a) an organomagnesium component and (b) a metallic halide or (II) the reaction product of (C) an intermediate reaction product of (c) ester of tetravalent or trivalent titanium and (d) an organomagnesium component and (D) a metallic halide.

British Patent Specification No. 1235062 describes catalysts obtained by mixing an aluminium-halogen compound, a titanium compound and an organomagnesium compound, in which an activator is incorporated in the catalyst during and/or after the preparation and/or mixing of the catalyst components, the activator consisting of an alkanol, alkenol, an alkanolate, a carboxylic acid, an ester or a salt thereof, an aldehyde or a ketone.

United States Patent Specification No. 3880817 describes a catalyst prepared from an aluminium-halogen compound, a compound of a transition metal which is a halide, an alkoxide, or a chelate of a transition metal of Groups 4 to 6 and an organomagnesium compound.

United States Patent No. 2956993 describes a catalyst consisting essentially of (1) a metal halide selected from the group consisting of halides of titanium, zirconium, hafnium and germanium, (2) a compound of the formula $M'(OR')_x$ where M' is lithium, sodium, potassium, rubidium, cesium, magnesium, calcium, zinc, strontium, cadmium, barium, aluminium, gallium, indium or thallium and $R^1$ is an alkyl, alkenyl, cycloalkyl, cycloalkenyl or aryl radical and x is equal to the valence of metal M', and (3) (a) an organometallic halide or (b) an alkali metal aluminium hydride.

We have now developed novel catalyst compositions which comprise a complex of a trivalent titanium compound with an electron donor.

Accordingly, the present invention provides a catalytic reaction product of (A) a complex of a trivalent titanium compound with an electron donor, (B) an organomagnesium component selected from (1) an organomagnesium compound or (2) a complex of an organomagnesium compound and another organometallic compound, including boron trialkyls, alkyl silanes and alkyl phosphorus compounds, in an amount sufficient to solubilize the organomagnesium compound in hydrocarbon and (C) a halide source selected from (1) an active non-metallic halide having the formula R'X wherein R' is hydrogen or a hydrocarbyl group and X is a halogen and the labile halogen of the hydrocarbyl halide is at least as active as the halogen of sec-butyl chloride, or (2) a metallic halide having the formula $MR_{y-a}X_a$ wherein M is a metal of Group 3a or 4a of Mendeleev's Periodic Table of Elements, R is a monovalent organic radical, X is a halogen, y is a number corresponding to the valence of M and a is a number from 1 to y ; provided that the proportions of the foregoing components of the catalytic reaction product are such that the atomic ratio of Mg : Ti is from 1 : 1 to 2 000 : 1, either B, C or a mixture thereof which contains an aluminium compound, such as an aluminium halide, aluminium trialkyl or an aluminium alkyl halide, is added separately such that the atomic ratio of Al : Ti is from 0.1 : 1 to 2 000 : 1, and the atomic ratio of Mg : X is from 0.01 : 1 to 1 : 1.

The invention also provides a process for polymerizing ethylene or at least one α-olefin under conditions characteristic of Ziegler polymerization wherein the aforementioned reaction product is preferably employed as the sole catalyst.

Polymers produced in accordance with the process of this invention contain low amount of catalyst residues and tend to be highly uniform.

The invention is most advantageously practised in a polymerization process wherein ethylene or an α-olefin is polymerized, generally in the presence of hydrogen as a molecular weight control agent, in a polymerization zone containing an inert diluent and the catalytic reaction product. Especially advantageous is the copolymerization of ethylene with α-olefins using the catalytic reaction product of this invention. The polymerization process is most beneficially carried out under an inert atmosphere and at relatively low temperature and pressure, although very high pressures are optionally employed.

Olefins which are suitably homopolymerized or copolymerized in the practice of this invention are generally the aliphatic α-mono-olefins or α-diolefins having from 3 to 18 carbon atoms. Such α-olefins include, for example, propylene, butene-1, pentene-1, 3-methylbutene-1, hexane-1, octene-1, dodecene-1, octadecene-1, butadiene, isoprene and 1,7-octadiene. The ethylene or α-olefins may be co-polymerized with ethylene or α-olefins and/or with small amounts, i. e., up to 25 weight percent based on the polymer, of other ethylenically unsaturated monomers such as styrene, α-methylstyrene and similar ethylenically unsaturated monomers which do not destroy conventional Ziegler catalysts. Most benefits are realized in the polymerization of ethylene and mixtures of ethylene and mixtures of ethylene and preferably up to 50, especially from 0.5 to 40, weight percent of propylene, butene-1, 1,7-octadiene or similar α-olefin, based on total monomer.

Preferably, the trivalent titanium complex is represented by the empirical formula : $TiZ_3(L)_x$ wherein Z is halide, and L is an alcohol having from 3 to 6 carbon atoms and x is a whole number from 1 to 6. In the most preferred complexes, Z is chloride or bromide, most preferably chloride and L is isopropyl alcohol, n-propyl alcohol, n-butyl alcohol or isobutyl alcohol. While the exact structure of the complex is not known, it is believed to contain 3 valence bonds to the halide ions and 1 to 6, preferably 2 to 4, coordination bonds to the electron donating compound. The titanium halide complex is most advantageously prepared by heating the trivalent titanium halide dispersed in the electron donating compound under nitrogen or similar inert atmosphere. Usually the formation of the complex is visually indicated by a definite change in colour. For example, when the dark purple α-TiCl$_3$ is heated in anhydrous isopropyl acohol under nitrogen, complex formation is indicated by the formation of a brilliant blue solution. In preferred complexes, the complex is normally solid.

A particularly preferred catalytic reaction product is one in which the trivalent titanium complex $TiZ_3(L)_x$ is a complex of titanium trichloride and isopropyl alcohol and x is 2 to 4 and the organomagnesium compound is dibutyl magnesium.

In addition to an α-TiCl$_3$, the Δ, γ and β crystalline forms of titanium trichloride are advantageously employed in the preparation of the complex. Also suitable are, for example, titanium tribromide and titanium fluoride. Of the foregoing, the γ- and α-forms of titanium trichloride are preferred.

The preferred organomagnesium component is a hydrocarbon soluble complex illustrated by the formula $MgR''_2 \cdot xMR''_y$ wherein R'' is hydrocarbyl, M is aluminium, zinc or mixtures thereof and x is 0.001 to 10, especially from 0.15 to 2.5 and y denotes the number of hydrocarbyl groups which corresponds to the valence of M. As used herein, hydrocarbyl is a monovalent hydrocarbon radical. Preferably, hydrocarbyl is alkyl, cycloalkyl, aryl, aralkyl, alkenyl and similar hydrocarbon radicals having 1 to 8 carbon atoms with alkyl having 1 to 4 carbon atoms being especially preferred. This complex is prepared by reacting particulate magnesium such as magnesium turnings, or magnesium particles with about a stoichiometric amount of hydrocarbyl halide, illustrated as R''X. The resulting hydrocarbon insoluble MgR$_2$ is solubilized by adding the other organometallic compound such as AlR''$_3$ or mixtures thereof with ZnR''$_2$. The amount of organometallic compounds which is added to the MgR''$_2$ to form the organomagnesium complex should be enough to solubilize a significant amount of MgR''$_2$, e. g. at least 5 weight percent of MgR''$_2$ is solubilized. It is preferred to solubilize at least 50 weight percent of the MgR''$_2$ and especially preferred to solubilize all of MgR''$_2$.

The organomagnesium component is preferably a complex of dialkyl magnesium and a trialkyl aluminium wherein the atomic ratio of Mg : Al in the organomagnesium component is in the range of from 0.3 : 1 to 1 000 : 1. When employing a mixture of AlR''$_3$ and ZnR''$_2$ to solubilize MgR''$_2$, the atomic ratio of Zn to Al is from 3 000 : 1 to 0.1 : 1, preferably from 350 : 1 to 1 : 1. In order to obtain maximum catalyst efficiency at polymerization temperatures above 180 °C, it is desirable to minimize the amount of aluminium in the complex as well as in the total catalyst. Accordingly, for catalysts having Al : Ti atomic ratios less than 120 : 1, it is desirable to have a Mg : Al atomic ratio in the range of from 0.3 : 1 to 1 000 : 1, preferably from 0.5 : 1 to 10 : 1. In suitable complexes, other organometallic compounds (other than AlR''$_3$, ZnR''$_2$ or mixtures thereof) which also solubilize the organomagnesium compound in hydrocarbon are employed in beneficial amounts, usually an amount sufficient to produce at atomic ratio of 0.01 : 1 to 10 : 1 of metal of the other organometallic compounds to magnesium. Examples of such other organometallic compounds include boron trialkyls such as boron triethyl, alkyl silanes such as dimethyl silane and tetraethyl silane, alkyl in and alkyl phosphorus compounds.

Alternative of the aforementioned solubilized magnesium complexes, it is also advantageous to employ organomagnesium compounds as the organomagnesium component. Such compounds, although often insoluble in hydrocarbon, are suitably employed. These compounds can be rendered soluble in hydrocarbon by addition of ether, amine, etc., although such solubilizing agents often reduce the activity of the catalyst. Recently, such compounds have been made hydrocarbon soluble without using such catalyst poisons, e. g., as taught in U.S. Patent 3,646,231. The more recent hydrocarbon solubilized organomagnesium compounds are the most desirable if an organomagnesium compound is to be used as the organomagnesium component.

**0 008 595**

Preferably, the organomagnesium compound is a dihydrocarbylmagnesium such as the magnesium dialkyls and the magnesium diaryls. Exemplary suitable magnesium dialkyls include dibutylmagnesium particularly di-n-butyl magnesium and n-butyl sec-butyl magnesium, dipropylmagnesium, diethylmagnesium, dihexylmagnesium, propylbutylmagnesium and others wherein alkyl has from 1 to 20 carbon atoms. Exemplary suitable magnesium diaryls include diphenylmagnesium, dibenzylmagnesium, and ditolylmagnesium, with the dialkylmagnesiums such as dibutylmagnesium, being especially preferred. Suitable organomagnesium compounds include alkyl and aryl magnesium alkoxides and aryloxides and aryl and alkyl magnesium halides with the halogen-free organomagnesium compounds being more desirable.

The preferred halide sources are the active non-metallic halides of the formula set forth hereinbefore including hydrogen halides and active organic halides such as t-alkyl halides, allyl halides, benzyl halides and other active hydrocarbyl halides wherein hydrocarbyl is as defined hereinbefore. By an active organic halide is meant a hydrocarbyl halide that contains a labile halogen at least as active, i. e., as easily lost to another compound, as the halogen of sec-butyl chloride and preferably as active as the halogen of t-butyl chloride. In addition to the organic monohalides, it is understood that organic dihalides, trihalides and other polyhalides that are active as defined hereinbefore are also suitably employed. Preferred active non-metallic halides include, for example, hydrogen chloride, hydrogen bromide, t-alkyl chloride e. g. t-butyl chloride, t-amyl bromide, allyl chloride, benzyl chloride, crotyl chloride, methylvinyl carbinyl chloride, α-phenylethyl bromide and diphenyl methyl chloride. Most preferred are hydrogen chloride, t-butyl chloride, allyl chloride and benzyl chloride.

Suitable metallic halides as set forth by formula hereinbefore are organometallic halides and metal halides wherein the metal is in Group 3a or 4a of Mendeleev's Periodic Table of Elements. Preferred metallic halides are aluminum halides of the formula $AlR_{3-a}X_a$ wherein R is hydrocarbyl such as alkyl, X is halogen and a is a number from 1 to 3. More preferred are alkylaluminum halides such as ethylaluminum sesquichloride, diethylaluminum chloride, ethylaluminum dichloride, and diethylaluminum bromide, with ethylaluminum dichloride being especially preferred. Alternatively, a metal halide such as aluminum trichloride or a combination of aluminum trichloride with an alkyl aluminum halide or a trialkyl aluminum compound may be suitably employed.

The organic moieties of the organomagnesium, e. g., R", and the organic moieties of the halide source, e. g., R and R', are suitably any other organic radical provided that they do not contain functional groups that poison conventional Ziegler catalysts. Preferably, such organic moieties do not contain active hydrogen, i. e., those sufficiently active to react with the Zerewitinoff reagent.

In order to maximize catalyst efficiency, the catalyst is prepared by mixing the components of the catalyst in an inert liquid diluent in the following especially preferred order : organomagnesium, titanium complex and halide source. Somewhat less preferred is the order of addition wherein the organomagnesium component is first added to an inert liquid diluent followed by the addition of the halide source and then the titanium complex. Suitable, but least preferred, is the order of addition wherein (1) the halide source is first combined with the titanium complex and then with the organomagnesium or (2) all three components are added and mixed simultaneously. The foregoing catalyst components are combined in proportions sufficient to provide an atomic ratio of Mg : Ti in the range from 1 : 1 to 2 000 : 1, preferably from 10 : 1 to 100 : 1, most preferably from 20 : 1 to 80 : 1 ; and an atomic ratio of Mg : X in the range from 0.01 : 1 to 1 : 1, preferably from 0.2 : 1 to 0.7 : 1, most preferably from 0.4 : 1 to 0.6 : 1.

In cases wherein neither the organomagnesium component nor the halide source contains aluminum, it is necessary to include in the total catalyst an aluminum compound such as an alkyl aluminum compound, e. g., a trialkyl aluminum, an alkyl aluminum halide or an aluminum halide. If polymerization temperatures below 180 ºC are employed, the atomic ratio of Al : Ti may be from 0.1 : 1 to 2 000 : 1, preferably 1 : 1 to 200 : 1. However, when polymerization temperatures above 180 ºC are employed, the aluminum compound is used in proportions such that the Mg : Al ratio is more than 0.3 : 1, preferably from 0.5 : 1 to 10 : 1, and Al : Ti ratio is less than 120 : 1, preferably less than 75 : 1. These use of very low amounts of aluminum, however, necessitates the use of high purity solvents or diluents in the polymerization zone. Further, other components present in the zone should be essentially free of impurities which react with aluminum alkyls. Otherwise additional organo aluminum must be used to react with such impurities. Moreover, in the catalyst the aluminum compound should be in the form of trialkyl aluminum or alkyl aluminum halide provided that the alkyl aluminum halide be substantially free of alkyl aluminum dihalide.

The foregoing catalytic reaction products are preferably carried out in the presence of an inert diluent. The concentrations of catalyst components are preferably such that when the three essential components of the catalytic reaction product are combined, the resultant slurry is from 0.005 to 0.1 molar (moles/liter) with respect to magnesium. Suitable inert organic diluents include, for example, liquefied ethane, propane, isobutane, n-butane, n-hexane, the various isomeric hexanes, isooctane, paraffinic mixtures of alkanes having from 8 to 9 carbon atoms, cyclohexane, methylcyclopentane, dimethylcyclohexane, dodecane, industrial solvents composed of saturated or aromatic hydrocarbons such as kerosene, naphthas. etc., especially when freed of any olefin compounds and other impurities, and especially those having boiling points in the range from — 50º to 200 ºC. Also included as suitable inert diluents are, for example, benzene, toluene, ethylbenzene, cumene and decalin.

4

Mixing of the catalyst components to provide the desired catalytic reaction product is advantageously carried out under an inert atmosphere such as nitrogen, argon or other inert gas at temperatures in the range from — 100 to 200 °C, preferably from 0° to 100 °C. The period of mixing is not considered to be critical as it is found that a sufficient catalyst composition most often occurs within about 1 minute or less. In the preparation of the catalytic reaction product, it is not necessary to separate hydrocarbon soluble components from hydrocarbon insoluble components of the reaction product.

Polymerization is effected by adding a catalytic amount of the catalyst composition to a polymerization zone containing ethylene or $\alpha$-olefin monomer, or vice versa. The polymerization zone is preferably maintained at temperatures in the range from 0 to 300 °C, preferably at solution polymerization temperatures, e. g., from 130° to 250 °C for a residence time of about a minute to several days, preferably 15 minutes to 2 hours. It is generally desirable to carry out the polymerization in the absence of moisture and oxygen and a catalytic amount of the catalytic reaction product is generally within the range from 0.000 1 to 0.1 millimoles titanium per liter of diluent. The most advantageous catalyst concentration will depend upon polymerization conditions such as temperature, pressure, solvent and presence of catalyst poisons and the foregoing range is given to obtain maximum catalyst yields in weight of polymer per unit weight of titanium. In the polymerization process, a carrier, which may be an inert organic diluent or solvent or excess monomer, is generally employed. In order to realize the full benefit of the high efficiency catalyst of the present invention, care must be taken to avoid over saturation of the solvent with polymer. If such saturation occurs before the catalyst becomes depleted, the full efficiency of the catalyst is not realized. For best results, it is preferred that the amount of polymer in the carrier not exceed 50 weight percent based on the total weight of the reaction mixture.

The polymerization pressures preferably employed are relatively low, e. g., from 50 to 1 000 psig (344.7 to 6 894.8 Kilopascals), especially from 100 to 600 psig (689.5 to 4 136.9 Kilopascals). However, polymerization within the scope of the present invention can occur at pressures from atmospheric up to pressures determined by the capabilities of the polymerization equipment. During polymerization it is desirable to stir the polymerization recipe to obtain better temperature control and to maintain uniform polymerization mixtures and throughout the polymerization zone.

In order to optimize yields in the polymerization of ethylene, it is preferable to maintain an ethylene concentration in the solvent in the range from 1 to 10 weight percent, most advantageously 1.2 to 2 weight percent. To achieve this when an excess of ethylene is fed into the system, a portion of the ethylene can be vented.

Hydrogen is often employed in the practice of this invention to lower molecular weight of the resultant polymer. It is beneficial to employ hydrogen in concentrations ranging from 0.001 to 1 mole per mole of monomer. The larger amounts of hydrogen within this range are found to produce generally lower molecular weight polymers. Hydrogen can be added with a monomer stream to the polymerization vessel or separately added to the vessel before, during or after addition of the monomer to the polymerization vessel, but during or before the addition of the catalyst.

The monomer or mixture of monomers is contacted with the catalytic reaction product in any conventional manner, preferably by bringing the catalytic reaction product and monomer together with intimate agitation provided by suitable stirring or other means. Agitation can be continued during polymerization, or in some instances, the polymerization can be allowed to remain unstirred while polymerisation takes place. In the case of more rapid reactions with more active catalyst, means can be provided for refluxing monomer and solvent, if any of the latter is present and thus remove the heat of reaction. In any event, adequate means should be provided for dissipating the exothermic heat of polymerization. If desired, the monomer can be brought in the vapor phase into contact with the catalytic reaction product, in the presence or absence of liquid material. The polymerization can be affected in the batch manner, or in a continuous manner, such as, for example, by passing the reaction mixture through an elongated reaction tube which is contacted externally with suitable cooling medium to maintain the desired reaction temperature, or by passing the reaction mixture through an equilibrium overflow reactor or a series of the same.

The polymer is readily recovered from the polymerization mixture by driving off unreacted monomer and solvent, if any is employed. No further removal of impurities is required. Thus, a significant advantage of the present invention is the elimination of the catalyst residue removal steps. In some instances, however, it may be desirable to add a small amount of a catalyst deactivating reagent of the types conventionally employed for deactivating Ziegler catalysts. The resultant polymer is found to contain insignificant amounts of catalyst residue and to possess a very narrow molecular weight distribution.

The following examples further illustrate the invention. All parts and percentages are by weight unless otherwise indicated.

In the following examples, the catalyst preparations are carried out in the absence of oxygen or water in a nitrogen filled 120 ml serum bottle. The catalyst components are used as diluted solutions in either n-heptane or Isopar E<sup>8</sup> (a mixture of saturated isoparaffins having 8 to 9 carbon atoms). Isopar is a Registered Trade mark. The polymerization reactions are carried out in a five liter stainless steel stirred batch reactor at 150 °C unless otherwise stated. In such polymerization reactions two liters of dry oxygen-free Isopar E<sup>8</sup> are added to the reactor and heated to 150 °C. The reactor is vented to about 25 psig (172.4 Kilopascals) and 15 to 20 psi (103.4 to 137.9 Kilopascals) of hydrogen is added for polymer molecular weight control. Then, 120 psi (827.4 Kilopascals) of ethylene is added to the reactor and the ethylene pressure is set to maintain the reactor pressure at 160 psig (1 103.2 Kilopascals). The catalyst is then pressured into the reactor using nitrogen and the reactor temperature is maintained for the desired polymerization time. The polymerization reactor contents are dumped into a stainless steel beaker and allowed to cool. The resulting slurry is filtered and the polymer dried and weighed. The ethylene consumption during polymerization is recorded with a DP cell which shows the rate of polymerization and the amount of polymer produced.

Catalyst efficiencies are reported as grams of polyethylene per gram of titanium, g · PE/g · Ti.

## Example 1

A catalyst is prepared by adding with stirring 0.43 ml of 0.688 M di(n-butyl) magnesium · 1/6 triethylaluminum in Isopar E® to 48,5 ml of Isopar E®. To this solution is added 0.66 ml of titanium complex which is 0.007 6 M based on Ti in Isopar E®. This complex is prepared by heating 20 g of α-TiCl$_3$ in 800 ml of isopropanol to a temperature of 80 °C until a brilliant blue solution is formed. To the resultant slurry are added 0.41 ml of 0.92 M ethylaluminum dichloride in cyclohexane. A 10 ml aliquot (0.001 0 mmoles Ti) of the resulting reaction product is added to the polymerization reactor. After 37 minutes, 248 grams of linear polyethylene is formed to give a catalyst efficiency of 5.7 × 10$^6$ g · PE/g · Ti.

## Example 2

A catalyst is prepared by adding 81.61 ml of Isopar E®, and 1.49 ml of 0.516 M di(n-butyl) magnesium · 2 triethylaluminum in Isopar E® to a serum bottle. To the resultant solution is added, in order, 1.9 ml of a slurry of the titanium complex described in Example 1 which is 0.008 1 M with respect to Ti in Isopar E® and 15 ml of 0.113 M HCl in Isopar E®. Ten milliliters of this catalyst (0.001 5 mmoles Ti) is added to the polymerization reactor and after 30 minutes the reactor contents are collected. The yield of polymer is 158 grams indicating a catalyst efficiency of 2.2 × 10$^6$ g · PE/g · Ti.

## Example 3

Following the general operating procedure described hereinbefore, several catalysts are prepared and polymerization runs are made. Unless otherwise indicated, the total catalyst concentration in the polymerization reactor is 0.001 millimolar based on Ti and the polymerization temperature is 150 °C. The catalysts and the results of these polymerization runs are reported in the following Table.

TABLE

Catalyst components

| Run No. | Order of addition (1) | Molar ratios (2) | Catalyst efficiency g . PE/g . Ti |
|---|---|---|---|
| 1 | TiCl$_3$(iPrOH)$_x$/DBMg · 1/6Al(Et)$_3$/EADC | 1/59/75 | 4.53×10$^6$ |
| 2 | EADC/TiCl$_3$(iPrOH)$_x$/DBMg · 1/6Al(Et)$_3$ | 75/1/59 | 3.2×10$^6$ |
| 3 | EADC/DBMg · 1/6Al(Et)$_3$/TiCl$_3$ · (iPrOH)$_x$ | 75/59/1 | 4.86×10$^6$ |
| 4 | DBMg · 1/6Al(Et)$_3$/TiCl$_3$(iPrOH)$_x$/EADC | 59/1/75 | 5.17×10$^6$ |
| 5 | DBMg · 2Al(Et)$_3$/TiCl$_3$(iPrOH)$_x$/EADC | 40/1/60 | 3.8×10$^6$ |
| 6 | DBMg · 2Al(Et)$_3$/TiCl$_3$(iPrOH)$_x$/EADC | 40/1/50 | 3.76×10$^6$ |
| 7**(a) | DBMg · 2Al(Et)$_3$/TiCl$_3$(iPrOH)$_x$tBuCl | 40/1/130 | 1.03×10$^6$ |
| 8* | DBMg · 2Al(Et)$_3$/TiCl$_3$(iPrOH)$_x$/HCl | 40/1/160 | 2.29×10$^6$ |
| 9*** | HCl/DBMg · 2Al(Et)$_3$/TiCl$_3$(iPrOH)$_x$ | 200/50/1 | 1.28×10$^6$ |
| 10*** | HCl/DBMg · 2Al(Et)$_3$/TiCl$_3$(iPrOH)$_x$ | 180/50/1 | 2.82×10$^6$ |
| 11*** | HCl/DBMg · 2Al(Et)$_3$/TiCl$_3$(iPrOH)$_x$ | 160/50/1 | 1.9×10$^6$ |
| 12*** | HCl/DBMg · 2Al(Et)$_3$/TiCl$_3$(iPrOH)$_x$ | 190/50/1 | 1.87×10$^6$ |
| 13* | DBMg · 2Al(Et)$_3$/TiCl$_3$(iPrOH)$_x$/HCl | 60/1/216 | 2.14×10$^6$ |
| 14* | DBMg · 1/3Al(Et)$_3$/TiCl$_3$(iPrOH)$_x$/EADC | 50/1/60 | 3.0×10$^6$ |
| 15* | DBMg · 1/6Al(Et)$_3$/TiCl$_3$(iPrOH)$_x$/EADC/ZnEt$_2$ | 59/1/75/2 | 4.55×10$^6$ |
| 16 | DBMg · 1/6Al(Et)$_3$/TiCl$_3$(iPrOH)$_x$/EADC | 40/1/60 | 1.42×10$^6$ |
| 17* | DBMg · 1/6Al(Et)$_3$/TiCl$_3$(iPrOH)$_x$/EADC | 80/1/100 | 3.4×10$^6$ |
| 18**** | DBMg · 1/6Al(Et)$_3$ · Zn(Et)$_3$/TiCl$_3$(iPrOH)$_x$/EADC | 60/1/75 | 2.33×10$^6$ |

Notes

\* catalyst concentration of 0.001 5 millimolar based on Ti

\*\* catalyst concentration of 0.002 5 millimolar based on Ti

\*\*\* catalyst concentration of 0.001 7 millimolar based on Ti

\*\*\*\* catalyst concentration of 0.003 millimolar based on Ti

6

(a) polymerization temperature of 180 °C

(1) DBMg · 1/6Al(Et)$_3$ = di(n-butyl) magnesium · 1/6 aluminum triethyl
DBMg · 2Al(Et)$_3$ = di(n-butyl) magnesium · 2 aluminum triethyl
DBMg · 1/3Al(Et)$_3$ = di(n-butyl) magnesium · 1/3 aluminum triethyl
TiCl$_3$(iPrOH)$_x$ = complex of titanium trichloride and isopropyl alcohol, x = ~ 3
TiCl$_3$(EtOH)$_x$ = complex of titanium trichloride and ethyl alcohol, x = ~ 3
Ti(OiPr)$_4$ = tetra(isopropoxy) titanium
t-BuCl = t-butyl chloride
EADC = ethyl aluminum dichloride

(2) Molar ratios of catalyst components as listed in Order of Addition

## Example 4

Using a catalyst prepared in accordance with Example 1 and having a Mg/Ti/Al atomic ratio of 60/1/75, a polymerization run is carried out generally according to the general operating procedure except that varying amounts of 1,7- octadiene are substituted for a part of the solvent and 150 psig (1 034.2 Kilopascals) ethylene is employed in the absence of hydrogen.

As the octadiene is increased from 0.1 to 20.0 ml in 2 liters of solvent, the catalyst efficiency decreases from 2.32 × 10$^6$ to 0.38 × 10$^6$ g of polymer per g of Ti. Also as the octadiene is increased, the molecular weight distribution of the polymer is broadened and the environmental stress crack resistance of the polymer is improved.

## Example 5

Again using a catalyst prepared in accordance with Example 1, a polymerization run is carried out in accordance with the general operating procedure except that 45 g of butene-1 is employed in 2 liters of Isopar E®. The catalyst (a portion corresponding to 0.004 5 mmole of Ti) is added to the reaction vessel and after 33 minutes 303 g of polymer is obtained indicating a catalyst efficiency of 1.4 × 10$^6$ g of polymer per g of Ti. The polymer has a very narrow molecular weight distribution and a low peak molecular weight. If the polymerization temperature is lowered to 80 °C, a polymer having a broader molecular weight distribution and higher molecular weight is obtained with the recovered polymer exhibiting rubbery characteristics.

## Example 6

Using a catalyst prepared as in Example 1, a polymerization run is carried out in accordance with the general operating procedure except that 100 psig (689.5 Kilopascals) of propylene is introduced into the reactor followed by an introduction of 200 psig (1 379 Kilopascals) of ethylene and polymerization is effected at 75 °C. After 50 minutes, 188 g of rubbery ethylene/propylene copolymer is obtained indicating a catalyst efficiency of 0.44 × 10$^6$ g of copolymer per g of Ti.

If the propylene pressure is reduced to 120 psig (872.4 Kilopascals), the ethylene pressure is reduced to 162 psig (1 117 Kilopascals) and polymerization carried out at 100 °C, the catalyst efficiency is 0.47 × 10$^6$ g of polymer per g of Ti and the resulting copolymer is very tough and has good clarity.

**Claims**

1. A catalytic reaction product of (A) a complex of a trivalent titanium compound with an alcohol having from 3 to 6 carbon atoms, (B) an organomagnesium component selected from (1) an organomagnesium compound or (2) a complex of an organomagnesium compound and another organometallic compound, including boron trialkyls, alkyl silanes and alkyl phosphorus compounds, in an amount sufficient to solubilize the organomagnesium compound in hydrocarbon and (C) a halide source selected from (1) an active non-metallic halide having the formula R′X wherein R′ is hydrogen or a hydrocarbyl group and X is a halogen and the labile halogen of the hydrocarbyl halide is at least as active as the halogen of sec-butyl chloride or (2) a metallic halide having the formula MR$_{y-a}$X$_a$ wherein M is a metal of Group 3a or 4a of Mendeleev's Periodic Table of Elements, R is a monovalent organic radical, X is halogen, y is a number corresponding to the valence of M and a is a number from 1 to y ; provided that the proportions of the foregoing components of the catalytic reaction product are such that the atomic ratio of Mg : Ti is from 1 : 1 to 2 000 : 1, either B, C or a mixture thereof which contains an aluminium compound, such as an aluminium halide, aluminium trialkyl or an aluminium alkyl halide, is added separately such that the atomic ratio of Al : Ti is from 0.1 : 1 to 2 000 : 1, and the atomic ratio of Mg : X is from 0.01 : 1 to 1 : 1.

2. A product as claimed in Claim 1 wherein the organomagnesium compound is a dihydrocarbyl magnesium.

3. A product as claimed in Claim 1 wherein the organomagnesium component is a complex of dialkyl magnesium and a trialkyl aluminium wherein the atomic ratio of Mg : Al in the organomagnesium component is the range of from 0.3 : 1 to 1 000 : 1.

4. A product as claimed in any one of the preceding claims wherein the atomic ratio of Mg : Ti is from 10 : 1 to 80 : 1, the atomic ratio of Mg : X is from 0.2 : 1 to 0.7 : 1 and the atomic ratio of Mg : Al is from 0.5 : 1 to 10 : 1 for the total catalytic reaction product.

5. A product as claimed in any one of the preceding claims wherein the complex A as defined in Claim 1 is represented by the empirical formula $TiZ_3(L)_x$ wherein Z is halide, L is water, alcohol, ether, ketone, amine or olefin and x is a whole number from 1 to 6.

6. A product as claimed in Claim 5 wherein the organomagnesium compound is dihydrocarbyl magnesium, the other organo metallic compound is an aluminium trihydrocarbyl ; the non-metallic halide is hydrogen halide or hydrocarbyl halide ; the metallic halide is an aluminium halide having the formula $AlR_{3-a}X_a$ wherein R is alkyl, X is halogen, and a is a number from 1 to 3 ; the Mg : Ti ratio is from 20 : 1 to 80 : 1, the Mg : X ratio is from 0.4 : 1 to 0.6 : 1 and the Mg : Al ratio in the total catalytic product is from 0.5 : 1 to 10 : 1.

7. A product as claimed in Claim 6 wherein the dihydrocarbyl magnesium is dialkyl magnesium, the aluminium trihydro-carbyl is aluminium trialkyl, the non-metallic halide is hydrogen chloride or t-alkyl chloride ; and the aluminium halide is an alkyl aluminium chloride.

8. A product as claimed in Claim 7 wherein the complex (A) as defined in Claim 1 is a complex of titanium trichloride and isopropyl alcohol and x is 2 to 4 and the dialkyl magnesium is dibutyl magnesium.

9. A process for the polymerization of ethylene, an α-olefin or a diolefin containing an α-olefin group under the conditions characteristic of Ziegler polymerization wherein the polymerization catalyst is the catalytic reaction product as claimed in any one of Claims 1 to 8.

10. A process as claimed in Claim 9 wherein a mixture of ethylene and an α-olefin is used.

**Patentansprüche**

1. Katalytisches Reaktionsprodukt von (A) einem Komplex einer dreiwertigen Titanverbindung mit einem Alkohol mit 3 bis 6 Kohlenstoffatomen, (B) einer Organomagnesiumkomponente ausgewählt aus (1) einer Organomagnesiumverbindung oder (2) einem Komplex einer Organomagnesiumverbindung und einer anderen organometallischen Verbindung, einschließlich Bortrialkylen, Alkylsilanen und Alkylphosphorverbindungen, in ausreichenden Mengen, um die Organomagnesiumverbindung in Kohlenwasserstoff löslich zu machen, und (C) einer Halogenidquelle, ausgewählt aus (1) einem aktiven nichtmetallischen Halogenid der Formel R′X, in der R′ Wasserstoff oder eine Hydrocarbylgruppe ist und X ein Halogen ist und das labile Halogen des Hydrocarbylhalogenids mindestens so aktiv wie das Halogen von sek-Butylchlorid ist oder (2) einem Metallhalogenid der Formel $MR_{y-a}X_a$, in der M ein Metall der Gruppe 3a oder 4a des Periodensystems der Elemente nach Mendelejew ist, R ein einwertiger organischer Rest ist, X Halogen ist, y eine der Wertigkeit von M entsprechende Zahl ist und a eine Zahl von 1 bis y ist, vorausgesetzt, daß die Verhältnisse der vorstehenden Komponenten des katalytischen Reaktionsproduktes derartig sind, daß das Atomverhältnis von Mg : Ti von 1 : 1 bis 2 000 : 1 ist, entweder B, C oder eine Mischung davon, die eine Aluminiumverbindung enthält, wie ein Aluminiumhalogenid, ein Aluminiumtrialkyl oder ein Alkylaluminiumhalogenid, getrennt zugegeben wird, so daß das Atomverhältnis von Al : Ti von 0,1 : 1 bis 2 000 : 1 ist und das Atomverhältnis von Mg : X von 0,01 : 1 bis 1 : 1 ist.

2. Reaktionsprodukt nach Anspruch 1, dadurch gekennzeichnet, daß die Organomagnesiumverbindung Dihydrocarbylmagnesium ist.

3. Produkt nach Anspruch 1, dadurch gekennzeichnet, daß die Organomagnesiumkomponente ein Komplex von Dialkylmagnesium und einem Trialkylaluminium ist, wobei das Atomverhältnis von Mg : Al in der Organomagnesiumkomponente im Bereich von 0,3 : 1 bis 1 000 : 1 ist.

4. Produkt nach einem der vorhergehenden Ansprüche, dadurch gekennzeichnet, daß das Atomverhältnis von Mg : Ti von 20 : 1 bis 80 : 1 ist, das Atomverhältnis von Mg : X von 0,2 : 1 bis 0,7 : 1 ist und das Atomverhältnis von Mg : Al von 0,5 : 1 bis 10 : 1 für das gesamte katalytische Reaktionsprodukt ist.

5. Produkt nach einem der vorhergehenden Ansprüche, dadurch gekennzeichnet, daß der in Anspruch 1 definierte Komplex A der empirischen Formel $TiZ_3(L)_x$ entspricht, wobei Z ein Halogenid ist, L Wasser, Alkohol, Ether, Keton, Amin oder Olefin ist und x eine ganze Zahl von 1 bis 6 ist.

6. Produkt nach Anspruch 5, dadurch gekennzeichnet, daß die Organomagnesiumverbindung Dihydrocarbylmagnesium ist, die andere organometallische Verbindung ein Aluminiumtrihydrocarbyl ist, das nicht-metallische Halogenid ein Halogenwasserstoff oder ein Hydrocarbylhalogenid ist, das metallische Halogenid ein Aluminiumhalogenid der Formel $AlR_{3-a}X_a$ ist, wobei R ein Alkyl ist, X Halogen ist und a eine Zahl von 1 bis 3 ist, das Verhältnis Mg : Ti von 20 : 1 bis 80 : 1 ist, das Mg : X Verhältnis von 0,4 : 1 bis 0,6 : 1 ist und das Mg : Al Verhältnis in dem gesamten katalytischen Produkt von 0,5 : 1 bis 10 : 1 ist.

7. Produkt nach Anspruch 6, dadurch gekennzeichnet, daß das Dihydrocarbylmagnesium Dialkylmagnesium ist, das Aluminiumtrihydrocarbyl ein Aluminiumtrialkyl ist, das nichtmetallische Halogenid Chlorwasserstoff oder ein t-Alkylchlorid ist und das Aluminiumhalogenid ein Alkylaluminiumchlorid ist.

8. Produkt nach Anspruch 7, dadurch gekennzeichnet, daß der in Anspruch 1 definierte Komplex (A) ein Komplex von Titantrichlorid und Isopropylalkohol ist und x 2 bis 4 ist und das Dialkylmagnesium Dibutylmagnesium ist.

9. Verfahren für die Polymerisation von Ethylen, einem $\alpha$-Olefin oder einem Diolefin, das eine $\alpha$-Olefingruppe enthält, unter für die Ziegler-Polymerisation charakteristischen Bedingungen, dadurch gekennzeichnet, daß der Polymerisationskatalysator das katalytische Reaktionsprodukt nach einem der Ansprüche 1 bis 8 ist.

10. Verfahren nach Anspruch 9, dadurch gekennzeichnet, daß eine Mischung von Ethylen und einem $\alpha$-Olefin verwendet wird.

## Revendications

1. Produit catalytique de la réaction de (A) un complexe d'un composé du titane trivalent avec un alcool comportant de 3 à 6 atomes de carbone, (B) un composant organomagnésien choisi entre (1) un composé organomagnésien ou (2) un complexe d'un composé organomagnésien et d'un autre composé organométallique, comprenant les bords trialkyles, les alkylsilanes et les composés de l'alkylphosphore, en une quantité suffisante pour solubiliser le composé organomagnésien dans les hydrocarbures, et (C) une source d'halogénures choisie entre (1) un halogénure non métallique actif ayant la formule R'X où R' est l'hydrogène ou un groupe hydrocarbyle et X est un halogène, et où l'halogène labile de l'halogénure d'hydrocarbyle est au moins aussi actif que l'halogène du chlorure de sec-butyle, ou (2) un halogénure métallique ayant la formule $MR_{y-a}X_a$ où M est un métal du groupe 3a ou 4a du Tableau Périodique des Eléments de Mendeleev, R est un radical organique monovalent, X est un halogène, y est un nombre correspondant à la valence de M et a est un nombre compris entre 1 et y ; à la condition que les propositions des composants ci-dessus du produit de réaction catalytique soient telles que le rapport atomique Mg : Ti soit compris entre 1 : 1 et 2 000 : 1, ou B, ou C, ou un de leurs mélanges contenant un composé de l'aluminium, tel qu'un halogénure d'aluminium, un aluminium trialkyle ou un halogénure d'aluminium trialkyle, soit ajouté séparément de telle sorte que le rapport atomique Al : Ti soit compris entre 0,1 : 1 et 2 000 : 1 et que le rapport atomique Mg : X soit compris entre 0,01 : 1 et 1 : 1.

2. Procédé selon la revendication 1, caractérisé en ce que le composé organomagnésien est un dihydrocarbylmagnésium.

3. Produit selon la revendication 1, caractérisé en ce que le composant organomagnésien est un complexe de dialkylmagnésium et d'un trialkylaluminium, où le rapport atomique Mg : Al dans le composant organomagnésien est compris entre 0,3 : 1 et 1 000 : 1.

4. Produit selon l'une quelconque des revendications 1 à 3, caractérisé en ce que le rapport atomique Mg : Ti est compris entre 20 : 1 et 80 : 1, le rapport atomique Mg : X est compris entre 0,2 : 1 et 0,7 : 1 et le rapport atomique Mg : Al est compris entre 0,5 : 1 et 10 : 1 pour la totalité du produit de réaction catalytique.

5. Produit selon l'une quelconque des revendications 1 à 4, caractérisé en ce que le complexe A tel que défini dans la revendication 1 est représenté par la formule empirique $TiZ_3(L)_x$ où Z est un halogénure, L est l'eau, un alcool, un éther, une cétone, une amine ou une oléfine et x est un nombre entier compris entre 1 et 6.

6. Produit selon la revendication 5, caractérisé en ce que le composé organomagnésien est un dihydrocarbylmagnésium, l'autre composé organométallique est un aluminiumtrihydrocarbyle ; l'halogénure non métallique est un halogénure d'hydrogène ou un halogénure d'hydrocarbyle ; l'halogénure métallique est un halogénure d'aluminium ayant la formule $AlR_{3-a}X_a$ où R est un alkyle, X est un halogène et a est un nombre compris entre 1 et 3 ; le rapport Mg : Ti est compris entre 20 : 1 et 80 : 1, le rapport Mg : X est compris entre 0,4 : 1 et 0,6 : 1 et le rapport Mg : Al dans le produit catalytique total est compris entre 0,5 : 1 et 10 : 1.

7. Produit selon la revendication 6, caractérisé en ce que le dihydrocarbylmagnésium est un dialkylmagnésium, l'aluminiumtrihydrocarbyle est un aluminiumtrialkyle, l'halogénure non métallique est l'acide chlorhydrique ou un chlorure de tert-alkyle ; et l'halogénure d'aluminium est un chlorure d'alkylaluminium.

8. Produit selon la revendication 7, caractérisé en ce que le complexe (A) tel que défini dans la revendication 1 est un complexe de trichlorure de titane et d'alcool isopropylique, x valant 2 à 4, le dialkylmagnésium étant le dibutylmagnésium.

9. Procédé pour la polymérisation de l'éthylène, d'une $\alpha$-oléfine ou d'une dioléfine contenant un groupe $\alpha$-oléfine, dans les conditions caractéristiques de la polymérisation de Ziegler, caractérisé en ce que le catalyseur de polymérisation est le produit de réaction catalytique selon l'une quelconque des revendications 1 à 8.

10. Procédé selon la revendication 9, caractérisé en ce qu'il utilise un mélange d'éthylène et d'$\alpha$-oléfine.